# NEW EUROPEAN PATENT SPECIFICATION

(11) **EP 0 217 709 B2**
(45) Date of publication and mention of the opposition decision: **17.08.1994**
(45) Mention of the grant of the patent: 10.05.1989
(21) Application number: 86402051.6
(22) Date of filing: 18.09.1986
(51) Int. Cl.: B60T 13/52

(54) **Method of adjusting a vacuum brake booster**
Verfahren zum Einstellen eines Unterdruck-Bremskraftverstärkers
Méthode d'ajustage d'un servofrein à vide

(30) Priority: 24.09.1985 IT 2226185
(43) Date of publication of application: 08.04.1987
(73) Proprietor: BENDIX ITALIA S.p.A., I-26013 Crema (IT)
(72) Inventor: Cadeddu, Leonardo, I-26013 Crema (CR) (IT)
(74) Representative: Bentz, Jean-Paul

(56) References cited:
- DE-A- 2 918 913
- DE-C- 3 015 111
- GB-A- 2 133 848

## Description

The present invention relates to a method of adjusting a vacuum brake booster of the type generally used in combination with a hydraulic master cylinder for generating hydraulic pressure for the brakes of a vehicle.

With such braking booster assemblies, manufacturing tolerances are such that there is a possible variation in the positions of the various components. For example, the rearmost rest position of the master cylinder piston may vary by a known amount. When assembling a master cylinder and a booster it is important that the booster push rod be adjusted so as not to touch the rear surface of the master cylinder piston when in the rest position in order to avoid any possibility of the piston being displaced beyond its normal rest position with the associated possibility of the piston closing the hydraulic return passage to the master cylinder reservoir.

In previously proposed brake booster assemblies (see e.g. EP-A 143 270) it was necessary to adjust the push rod of the booster during assembly to take account of the maximum possible combination of tolerances for both the master cylinder and the booster in order to be sure that the push rod would not touch the rear of the master cylinder piston when assembled. This course of action allowed the replacement of the master cylinder during the life of the vehicle as it ensured that no contact would occur in the rest position between the push rod and the piston, whatever the tolerances.

However, this method of adjustment based on the maximum possible combination oftolerences had the disadvantage that in the majority of cases there was considerable play between the push rod and the piston which resulted in an undesirably long brake pedal travel experienced by the vehicle driver.

It is therefore an object of the present invention to provide a method of adjusting a vacuum brake booster to allow the effect of manufacturing tolerances on the play between the push rod and the master cylinder piston to be reduced to zero.

Vehicle manufacturers tend to specify the position of the linkage between the booster input shaft and the brake pedal. This position may also vary due to the various manufacturing tolerances in the booster.

It is therefore a further object of the present invention to provide a method of adjusting a vacuum brake booster to allow the position of the brake pedal linkage to be known. The object of the present invention is achieved by the features of claim 1.

It is an advantage of the present invention that such adjustment enables vehicle manufacturers' requirements to be more closely met, and also that the brake booster may more easily be replaced during the life of the vehicle on which it is used.

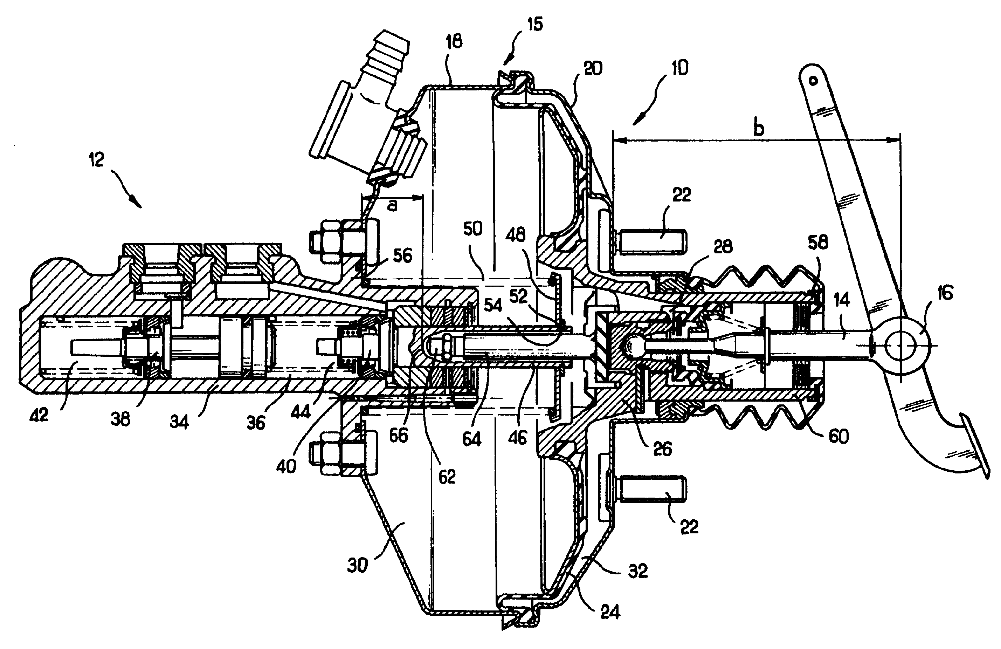

The invention will now be described by way of example with reference to the accompanying drawing which is a longitudinal sectional view of a vacuum brake booster according to the present invention.

As shown in the drawing, a vacuum brake booster assembly comprises a vacuum booster, shown generally at 10 and a master cylinder 12. The booster includes an input rod 14 intended to be connected to a vehicle brake pedal by an eye 16. A booster housing is formed by a first shell 18 and a second shell 20 on which are mounted retaining bolts 22 for securing the booster to a vehicle fire-wall (not shown). The first and second shells 18, 20 together support a flexible diaphragm 24 which is connected to a plastics piston 26 which, in turn, is linked to a valve assembly 28. The diaphragm 24 and the plastics piston 26 separate the interior of the housing 15 into first and second chambers 30 and 32.

The master cylinder 12 comprises a body 34 enclosing a stepped bore 36 in which, in the embodiment shown, are slidably mounted a pair of piston assemblies 38 and 40. Each piston assembly 38, 40 defines with the bore 36 a respective chamber 42, 44 each of which is associated with a respect ice vehicle braking circuit (not shown). The primary piston assembly 40 includes an extension 46 which projects into the interior of the first booster chamber 30. An annular retainer 48 is mounted on the extension 46 and is urged to the right, when viewing the drawing, by a spring 50 against a circlip 52 fixedly mounted in a groove 54 in the extension 46. The end of the spring 50 remote from the retainer48 abuts against a flange 56 on the master cylinder body 34. The spring 50 thus urges the first piston assembly into its rest position shown in the figure, which it adopts when the vehicle engine is switched off, resulting in the presence of air in the first and second booster chambers 30, 32.

When the vehicle engine is started a vacuum is applied to the first and second booster chambers 30, 32. As there is no return spring which acts directly on the plastics piston 26 this is free to move a limited distance to the left, when viewing the drawing, under the effect of atmospheric pressure acting on the annular surface 58 of a tubular extension 60 of the plastics piston 26. The travel to the left of the plastics piston 26 is limited by that point at which a screw head 62 on the end of a push rod 64 comes into contact with a concave internal surface 66 within the extension 46 of the first piston assembly 40. It is assumed that the stiffness of the spring 50 is sufficiently strong to prevent movement of the first piston assembly 40.

With previously proposed brake boosters the combination of manufacturing tolerances results in a certain amount of lost motion in the longitudinal displacement of the input rod 14 before the first piston assembly 40 starts to move. This is due to the presence of the gap between the screw head 62 and the concave surface 66 which results from existing methods of adjustment. As will be described below, according to the invention, the effect of the manufacturing tolerances is reduced to zero.

The maximum rearward position of the internal surface 66 is shown by distance a on the drawing ±X where X is the possible manufacturing tolerance of the master cylinder and is generally about 0.3 mm. Prior to assembling the master cylinder and the booster, the booster is placed on a test bed and the screw 62 is adjusted so that it is in a position to the rear of the maximum rearward position possible of the internal surface 66 i.e. a + X. When the booster assembly is mounted on a vehicle and the engine started, the atmospheric pressure on surface 58 will cause the plastic piston to move slightly to the left and take up the play between the screw head 62 and the internal surface 66. Thus the reduction to zero of the effect of tolerances is assured because, when the vehicle engine is started, the push rod 64 moves automatically into its optimum position relative to the internal surface 66 of the first piston assembly, thus assuring a short pedal stroke for the driver.

A second aspect of the present invention lies in a method for precisely determining the point at which the input rod 14 joins the brake pedal of the vehicle. Motor vehicle manufacturers normally specify the distance from the fire-wall to the point of attachment in order to ensure ease of assembly of the brake pedal and to provide an acceptable braking position for the vehicle driver. This distance is shown as b in the drawing. Whi le the booster is on the test bed, a stop for the screw head 62 is provided at the desired position described above, namely a + X and a vacuum is then applied to the booster. The push rod 64 then moves towards the stop reducing the play between the two parts to zero. The screw 62 is then adjusted to bring the eye 16 into its desired position at a distance b from the fire wall.

When the booster assembly is mounted on a vehicle the position of the eye 16 will be between b+0 and b-2 X where X results from the tolerences of the master cylinder discussed above and is extremely small when compared with b. The resulting tolerance of ±0.3 mm on the distance b falls well within motor manufacturers' requirements.

Thus, the present invention allows motor manufacturers' requirements to be more closely met than was previously possible.

## Claims

1. A method of adjusting a vacuum brake booster (10) assembly comprising a brake booster and a hydraulic master cylinder (12), the booster (10) comprising an input rod (14), a valve assembly (28) and piston means (24, 26) defining first and second chambers (30, 32) in the booster (10), the piston means (24, 26) being connected to an output shaft (64) having adjustment means (62) thereon; the master cylinder (12) comprising at least one piston assembly (38, 40) associated with a respective pressure chamber (42, 44) for a vehicle braking circuit, the piston assembly comprising spring means to urge it towards a rest position, the piston assembly (38, 40) and the output shaft (64) being adapted to cooperate when the brake booster assembly is in operation, characterized in that prior to assembling the master cylinder and the booster the following steps for adjustment of the brake booster are carried out on a test bed:
- setting a stop for the output shaft (64) at the maximum rearward position possible for the master cylinder piston (40);
- applying a vacuum to the working chambers (30, 32) of the booster (10), whereby the piston means (24, 26) moves under the influence of atmospheric pressure and the output shaft (64) moves towards the stop, reducing to zero the play between said output shaft and said stop;
- while the vacuum is still applied, adjusting the means (62) on the output shaft (64) to bring the input rod into a predetermined position.

## Patentansprüche

1. Verfahren zum Einstellen einer Unterdruck-Bremskraftverstärker-Anordnung mit einem Bremskraftverstärker (10) und einem hydraulischen Hauptzylinder (12), wobei der Verstärker (10) eine Eingangsstange (14), eine Ventilanordnung (28) und eine Kolbeneinrichtung (24,26) aufweist, die eine erste und eine zweite Kammer (30,32) im Verstärker (10) definieren, die Kolbeneinrichtung (24,26) mit einer Ausgangswelle (64) verbunden ist, an der Verstellmittel (62) vorgesehen sind, der Hauptzylinder (12) mindestens eine Kolbenanordnung (38,40) aufweist, die einer entsprechenden Druckkammer (42,44) für einen Fahrzeug-Bremskreis zugeordnet ist, die Kolbenanordnung Federmittel aufweist, um sie in eine Ruhestellung vorzuspannen, die Kolbenanordnung (38,40) und die Ausgangswelle (64) zusammenarbeiten, wenn die Bremskraftverstärker-Anordnung in Betrieb ist,
dadurch gekennzeichnet, daß vor dem Zusammenbau des Hauptzylinders und des Verstärkers die folgenden Schritte zum Einstellen des Bremskraftverstärkers auf einem Versuchsbett durchgeführt werden:
- ein Anschlag für die Ausgangswelle (64) wird an der maximalen rückwärtigen Stel-lung, die für den Hauptzylinderkolben (40) möglich ist, gesetzt;
- ein Unterdruck wird an die Arbeitskammer (30,32) des Hauptzylinders (10) angelegt, wodurch die Kolbeneinrichtung (24,26) sich unter dem Einfluß atmosphärischen Drucks bewegt und die Ausgangswelle (64) sich in Richtung auf den Anschlag bewegt, was das Spiel zwischen der Ausgangswelle und dem Anschlag auf Null verringert;
- während der Unterdruck noch angelegt ist, werden die an der Ausgangswelle (64) vorgesehenen Verstellmittel (62) verstellt, um die Eingangsstange in eine vorgegebene Stel-lung zu bringen.

## Revendications

1. Méthode pour ajuster un ensemble servofrein à vide (10) comprenant un servofrein et un maître cylindre hydraulique (12), le servofrein (10) comprenant une tige d'entrée (14), un ensemble soupape (28) et un piston (24,26) définissant une première et une seconde chambres (30,32) dans le servofrein (10), le piston (24,26, étant relié à un arbre de sortie (64) portant un moyen de réglage (62),le maître cylindre (12) comprenant au moins un ensemble piston (38,40) associés à une chambre de pression respective (42,44) pour un circuit de freinage du véhicule, l'ensemble piston comprenant un ressort pour le presser vers une position de repos, l'ensemble piston (38,40) et l'arbre de sortie (64) étant prévus pour agir conjointement quand l'ensemble servofrein est en fonctionnement,
caractérisée en ce que avant assemblage du mai- tre cylindre et du servofrein la méthode comprend les étapes suivantes effectuées sur un banc d'essai :
- mise en place d'une butée (62) sur l'arbre de sortie (64) à la position arrière la plus éloignée possible du piston du maître cylindre,
- application du vide aux chambres de travail (30,32 ) du servofrein(10) au moyen duquel le piston (24,26) se déplace sous l'influence de la pression atmosphérique et l'arbre de sortie (64) se déplace vers la butée,en réduisant à zéro le jeu entre l'arbre de sortie et la dite butée ,
- pendant que le vide est appliqué, réglage du moyen (62) sur l'arbre de sortie (64)pour amener la tige d'entrée dans une position prédéterminée.
